Europäisches Patentamt

European Patent Office

Office européen des brevets

(19)

(11) Veröffentlichungsnummer: **0 247 240 B1**

(12) **EUROPÄISCHE PATENTSCHRIFT**

(45) Veröffentlichungstag der Patentschrift: **06.03.91**

(51) Int. Cl.⁵: **F16K 1/226**

(21) Anmeldenummer: **86117217.9**

(22) Anmeldetag: **10.12.86**

(54) **Klappenventil.**

(30) Priorität: **10.12.85 DE 3543508**

(43) Veröffentlichungstag der Anmeldung:
**02.12.87 Patentblatt 87/49**

(45) Bekanntmachung des Hinweises auf die
Patenterteilung:
**06.03.91 Patentblatt 91/10**

(84) Benannte Vertragsstaaten:
**AT BE CH DE FR GB IT LI NL**

(56) Entgegenhaltungen:
**DE-A- 3 318 202**
**DE-A- 3 504 443**

(73) Patentinhaber: **Wärmekraft Gesellschaft Stober + Morlock GbR
Otto-Burrmeister-Allee 24
W-4350 Recklinghausen(DE)**

(72) Erfinder: **von Erichsen, Volker
Otto-Burrmeister-Allee 24
W-4350 Recklinghausen(DE)**
Erfinder: **Michels, Hubert
Julie-Postel-Strasse 19
W-4352 Herten(DE)**

(74) Vertreter: **Andrejewski, Walter et al
Patentanwälte Andrejewski, Honke & Partner
Postfach 10 02 54 Theaterplatz 3
W-4300 Essen 1(DE)**

## Beschreibung

Die Erfindung betrifft ein Klappenventil für grosse Leitungsquerschnitte mit einem Gehäuse und einer darin schwenkbar angeordneten Klappe, die gegen mindestens einen im Gehäuse angeordneten Ventilsitz anpressbar ist, wobei der Klappe im Bereich ihrer Ränder jeweils zweis etwa parallel zueinander verlaufende Dichtungen zugeordnet sind und im Gehäuse Luftzuführungsöffnungen angeordnet sind, die in den Raum zwischen den Dichtungen einmünden.

Ein Ventil dieser Gattung ist aus der DE-A-33 18 202 bekannt. Dort ist im Gehäuse im Bereich des Klappenventils ein Luftzuführungskanal angeordnet, der im Bereich der Ventilsitze mit einer Vielzahl von Öffnungen versehen ist und aus dem Luft in den Bereich zwischen den parallel zueinander verlaufenden, an den Rändern der Klappe angeordneten Dichtungen eintritt. Diese Luft wird als Sperrluft bezeichnet denn sie dient dazu,bei geschlossener Klappe den Übetritt des abzusperrenden Medium auch dann zu verhindern, wenn die Dichtungen des Klappenventils stellenweise durchlässig seind. Dies ist leicht dadurch möglich, dass die Sperrluft mit einem Durck eingeleitet wird der den des abzusperrenden Medium übersteigt.

Es hat sich jedoch gezeigt, dass dieses zum Stand der Technik gehörige Klappenventil Nachteile aufweist. In die ein Teil des Ventilgehäuses bildenden Sperrluftkanäle kann insbesondere in der Öffnungsstellung der Klappe, in der eine Sperrluftzufuhr nicht erfolgt, das aggressive Medium eindringen und dort Korrosionen verursachen oder Feststoffe ablagern, die die Durchgängigkeit der Sperrluftkanäle oder ihrer Öffnungen beeinträchtigen. Hierbei ist es besonders nachteilig, dass die Sperrluftkanäle geschlossen sein müssen um die Sperrluftzufuhr zu ermöglich, dass sie also von der Aussenseite des Ventilgehäuses zum Zwecke der Inspektion und der Reinigung nicht zugänglich sind.

Man hat zwar den Versuch gemacht, die Luftaustrittsöffnungen der Sperrluftkanäle mit Tellerventilen zu versehen, die durch die Klappe dann geöffnet werden wenn diese sich auf den zugehörigen Ventilsitz des Sperrluftkanales auflegt. Auch hierdurch konnten die obenbeschriebenen Mängel nicht beseitigt werden.

Der Erfindung liegt die Aufgabe zugrunde, ein Klappenventil für grosse Leitungsquerschnitte zu schaffen, das deren obenbeschriebene Vorteile aufweist jedoch ohne den Nachteil, dass innerhalb der Sperrluftzuleitung Korrosionen stattfinden oder Anbackungen erfolgen könnten, die die Funktionsfähigkeit der Sperrluftzuleitung beeinträchtigen könnten, und dies in einer besonders kostengünstigen Weise.

Gegenstand der Erfindung ist ein Klappenventil für grosse Leitungsquerschnitte mit einem Gehäuse und einer darin schwenkbar angeordneten Klappe, die gegen mindestens einen im Gehäuse angeordneten Ventilsitz anpressbar ist, wobei der Klappe im Bereich ihrer Ränder jeweils zwei etwa parallel zueinander verlaufende Dichtungen zugeordnet sind und im Gehäuse Luftzuführungsöffnungen angeordnet sind, die in den Raum zwischen den Dichtungen einmünden und das sich dadurch kennzeichnet, dass die Luftzuführungsöffnungen mit zur Luftzuführung dienenden Sperrluftventilen versehen sind, die an den von den Aussenseiten des Gehäuses freizugänglichen Ventilsitzen des Klappenventils angeordnet und mit vom Gehäuseprofil unabhängigen Luftzuleitungen verbunden sind.

Der Erfindung liegt die Erkenntnis zugrunde, dass ein die Klappe ganz oder teilweise umschliessender Luftzuführungskanal im Gehäuse nicht erforderlich ist. Gemäss der Erfindung wird dieser Luftzuführungskanal durch den Raum zwischen den zwei Dichtungen der Klappe ersetzt, der sich zwischen dem Sitz und den Dichtungen bildet, wenn die Klappe geschlossen ist, denn nur dann ist dieser Kanal erforderlich. Der Fortfall des im Gehäuse befindlichen Luftzuführungskanals hat die Folge, dass dessen Inspektion, Reinigung und Instandsetzung nicht mehr erforderlich ist. Die Inspektion und, wenn dies erforderlich sein sollte Reinigung und Instandsetzung des Raumes zwischen den Dichtungen, gleich ob sich diese an der Klappe oder am Gehäuse befinden würden, wobei das Erstere vorgezogen wird, ist ohne jede Schwierigkeit möglich. Dadurch, dass die Luftzuleitungen vom Gehäuseprofil unabhängig sind, werden erhebliche Kosteneinsparungen bei der Herstellung des Gehäuses erreicht.

Bei einer bevorzugten Ausführungsform des Klappenventils gemäss der Erfindung sind die Luftzuleitungen Stichleitungen, die von einer, an mindestens drei Seiten des Gehäuses angeordneten Luftleitungen abgehen. Hierbei kann es sich um eine einfache, kostengünstig herstellbare Rohrleitung handeln.

Zweckmässig sind die Sperrluftventile als Kolbenventile ausgebildet. Derartige Ventile lassen sich kostensparend herstellen und auf einfache Weise betätigen. Besonders vorteilhaft ist es, dass die vorderen Kolbenflächen der Kolben der Sperrluftventile in deren Schliess-Stellung auf oder über der Ventilsitzebene des Klappenventils liegen. Hierdurch ergibt sich bei der Öffnungsstellung des Klappenventils, also der Schliess-Stellung des Sperrluftventils, im Durchtrittsquerschnitt des Klappenventils eine ebene Fläche die den Eintritt von Feststoffen oder sonstigen schädlichen Bestandteilen in die Sperrluftzuführung verhindert.

Es ist zweckmässig, den Ventilsitz des Klappenventils mindestens im Bereich der Sperrluftventile, in dem er deren Ventilsitz bildet, aus korrosionsbeständigem Stahl herzustellen und den Kolben des Sperrluftventiles teilweise oder vollständig aus Polytetrafluoräthylen oder einm ähnlichen Material herzustellen. Hierdurch ergibt sich ein besonders dichter und dauerbeständiger Sitz des Sperrluftventiles und, wenn der Ventilsitz im gesamten Bereich des Klappenventiles aus korrosionsbeständigem Stahl hergestellt wird, eine besonders gute Abdichtung des Klappenventils.

Schliesslich ist es zweckmässig, die Antriebe der Sperrluftventile in Abhängigkeit vom Antrieb der Klappe zu be tätigen, so dass die Sperrluftventile nur dann geöffnet werden, wenn die Klappe in Richtung dieser Sperrluftventile betätigt wird. Besser ist es noch, die Antriebe der Sperrluftventile in Abhängigkeit von der Stellung der Klappe bzw. ihrer Flügels zu betätigen und zwar dann, wenn die Klappe auf denjenigen Ventilsitz auftrifft, der die Sperrluftventile enthält.

Eine Verbesserung des Erfindungsgegenstandes kann dadurch stattfinden, dass die an der Klappe angebrachten Dichtungen verschiebbar sind. Dies ermöglicht Nachstellungen von Verformungs- oder Verschleisserscheinungen, die während des Gebrauches auftreten.

Um zu verhindern, dass Feststoffe oder sonstige schädliche Stoffe in die Sperrluftzuleitungen oder die Sperrluftventile eintreten kann es zweckmässig sein, in dem etwa waagerechten unteren Bereich des Klappenventiles Sperrluftventile nicht anzuordnen.

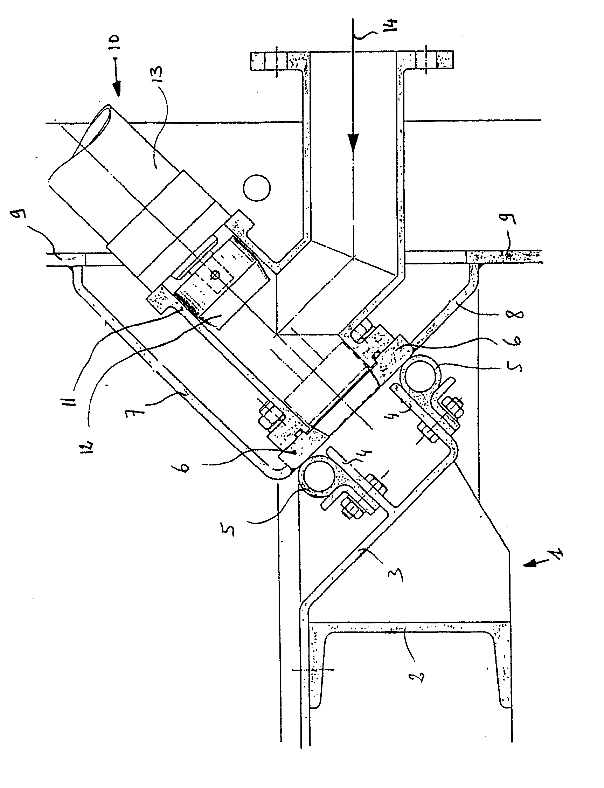

Ein Auführungsbeispiel des Klappenventils gemäss der Erfindung ist im folgenden anhand der Zeichnung beschrieben.

Die Zeichnung zweigt einen Querschnitt eines Teiles einer Klappe und einen Querschnitt durch einen Wandteil des Gehäuses, gegen den die Klappe anliegt.

Die in ihrer Gesamtheit mit 1 bezeichnete Klappe weist ein Konstruktionsprofil 2 auf, an dem ein Winkel 3 befestigt ist an dem Stege 4 befestigt sind, an die Dichtungsprofile 5 angeschraubt sind. Die Dichtungsprofile 5 liegen, wenn die Klappe 1 geschlossen ist, gegen Ventilsitze 6 an, wobei allerdings eine umgekehrteAusführung nicht ausgeschlossen ist.

Die Ventilsitze 6 sind vorzugsweise aus korrosionsbeständigem Stahl hergestellt. Sie können lediglich das Sperrluftventil umgeben aber auch sich über die gesamte Länge des Klappenflügels erstrecken. Die Ventilsitze 6 sind in den einen Teil des Gehäuses bildenden Profilen 7 und 8 angeordnet, die mit der Gehäuseaussenwand 9 verbunden sind.

Das insgesamt mit 1o bezeichnete Sperrluftventil besteht aus einem Ventilzylinder 11, der durch Schraubverbindungen jederzeit bei Verschleiss leicht ausgewechselt werden kann und einem im Zylinder 11 geführten Ventilkolben 12. Dieser Ventilkolben 12 besteht aus Tetrafluoräthylen oder aus einem Bauteil, dessen wirksame Flächen mit diesem Kunststoff beschichtet sind. Weiterhin ist ein in der Zeichnung nicht näher dargestellter Antrieb 13 vorhanden, der den Kolben 12 von der in der Zeichnung dargestellten Öffnungsstellung in die in der Zeichnung gestrichelt dargestellte Schliess-Stellung bewegt und umgekehrt. Der Antrieb 13 wird in Abhängigkeit von dem Antrieb oder der Stellung der Klappe 1 derart betätigt, dass das Sperrluftventil 1o dann geöffnet wird, wenn sich die Klappe 1 bzw. deren Dichtungsprofil 5 auf oder in der Nähe der Ventilsitze 6 befinden.

Die Sperrluftzufuhr zum Sperrluftventil 10 ist in der Zeichnung mit 14 bezeichnet. Sie ist an eine Luftzuleitung angeschlossen, die das Klappenventil umgibt.

Obwohl bei der Vorrichtung gemäss der Erfindung die äusserste Vorsorge dafür getroffen worden ist, dass Fremdstoffe in die Luftzuleitungen nicht eindringen können, kann es dennoch zweckmässig sein, im Bereich der waagerechten Unterseite der Klappe im Gehäuse Luftzuleitungsventile nicht anzuordnen. Dann aber ist es zweckmässig, Luftzuleitungsventile im Bereich der unteren Seiten der vertikalen Seitenwände des Flügels anzuordnen. Auch bei Klappenventilen mit sehr grossem Querschnitt kann es ausreichen, auf der Oberseite je eine und an den vertikalen Seitenwänden je zwei Luftzuleitungsventile anzuordnen.

**Ansprüche**

1. Klappenventil für grosse Leitungsquerschnitte mit einem Gehäuse und einer darin schwenkbar angeordneten Klappe (1), die gegen mindestens einen im Gehäuse angeordneten Ventilsitz (6) anpressbar ist, wobei der Klappe (1) im Bereich ihrer Ränder jeweils zwei etwa parallel zueinander verlaufende Dicthungen (5) zugeordnet sind und im Gehäuse Luftzuführungsöffnungen angeordnet sind, die in den Raum den Raum zwischen den Dichtungen (5) einmünden, **dadurch gekennzeichnet,** dass die Luftzuführungsöffnungen mit zur Luftzuführung dienenden Sperrluftventilen (1o) versehen sind, die an den von den Aussenseiten des Gehäuses frei zugänglichen Ventilsitzen (6) des Klappenventils angeordnet und mit vom Gehäuseprofil unabhängigen Luftzuleitungen (14) verbunden sind.

2. Klappenventil nach Anspruch 1, **dadurch ge-**

kennzeichnet, dass die Luftzuleitungen Stichleitungen (14) sind, die von einer an mindestens drei Seiten des Gehäuses angeordneten Luftzuleitung abgehen.

3. Klappenventil nach Anspruch 1 oder 2, dadurch gekennzeichnet, dass die Sperrluftventile (1o) als Kolbenventile ausgebildet sind.

4. Klappenventil nach Anspruch 3, dadurch gekennzeichnet, dass die vorderen Kolbenflächen der Kolben (12) der Sperrluftventile (1o) in deren Schliess-Stellung auf oder über der Ventilsitzebene (6) des Klappenventils liegen.

5. Klappenventil nach einem oder mehreren der Ansprüche 1-4, dadurch gekennzeichnet, dass der Ventilsitz (6) des Klappenventils mindestens im Bereich der Sperrluftventile (1o) in dem er deren Ventilsitz (6) bildet, aus korrosionsbeständigem Stahl besteht.

6. Klappenventil nach einem oder mehreren der Ansprüche 3-5, dadurch gekennzeichnet, dass der Kolben (12) des Sperrluftventils (1o) teilweise oder vollständig aus Polytetrafluoräthylen oder einem ähnlichen Material besteht.

7. Klappenventil nach einem oder mehreren der Ansprüche 1-6, dadurch gekennzeichnet, dass die Sperrluftventile (1o) Antriebe aufweisen, die in Abhängigkeit vom Antrieb der Klappe (1) betätigt werden.

8. Klappenventil nach einem oder mehreren der Ansprüche 1-6, dadurch gekennzeichnet, dass die Sperrluftventile (1o) Antriebe aufweisen, die in Abhängigkeit von der Stellung der Klappenflügels (1) betätigt werden.

9. Klappenventil nach einem oder mehreren der Ansprüche 1-8, dadurch gekennzeichnet, dass die Dichtungen (5) an der Klappe (1) verschiebbar angeordnet sind.

10. Klappenventil nach einem oder mehreren der Ansprüche 1-9, dadurch gekennzeichnet, dass Sperrluftventile (1o) nicht um Bereich des etwa waagerechten unteren Klappenrandes angeordnet sind.

## Claims

1. A check valve for lines of large cross-section, the valve having a housing and, pivotally disposed therein, a flap (1) adapted to be pressed against at least one valve seat (6) disposed in the housing, two seals (5) which extend substantially parallel to one another being associated with the flap (1) near its edges, the housing being formed with air supply orifices which extend into the space between the seals (5), characterised in that the air supply orifices have barrier air valves (10) which are adapted to supply air and which are disposed on the check valve seats (6), the same being freely accessible from the outsides of the housing, and which are connected to air supply lines (14) independent of the housing cross-section.

2. A check valve according to claim 1, characterised in that the air supply lines are bleed lines (14) which start from an air supply line disposed on at least three sides of the housing.

3. A check valve according to claim 1 or 2, characterised in that the barrier air valves (10) are plunger valves.

4. A check valve according to claim 3, characterised in that the front surfaces of the plungers (12) of the barrier air valves (10) are disposed, when the same are in their closed position, on or above the plane of the valve seats (6) of the check valve.

5. A check valve according to one or more of claims 1 to 4, characterised in that the valve seat (6) of the check valve is made of corrosion-resistant steel at least near the barrier air valves (10) in which it forms the valve seat (6) thereof.

6. A check valve according to one or more of claims 3 to 5, characterised in that the plunger (12) of the barrier air valve (10) is made partly or entirely of polytetrafluoroethylene or a similar material.

7. A check valve according to one or more of claims 1 to 6, characterised in that the barrier air valves (10) have drives which are actuated in dependence upon the drive of the flap (1).

8. A check valve according to one or more of claims 1 to 6, characterised in that the barrier air valves (10) have drives which are actuated in dependence upon the position of the flaps (1).

9. A check valve according to one or more of claims 1 to 8, characterised in that the seals (5) are arranged displaceably on the flap (1).

10. A check valve according to one or more of claims 1 to 9, characterised in that barrier air valves (10) are not disposed near the substantially horizontal bottom flap edge.

**Revendications**

1. Soupape à clapet pour grandes sections de conduite, comportant un boîtier et un clapet (1) articulé dans ce boîtier et apte à être pressé contre au moins un siège de soupape (6) aménagé dans le boîtier, deux joints (5) disposés à peu près parallèlement l'un par rapport à l'autre étant adjoints au clapet (1) dans la zone de chacun de ses bords et des ouvertures d'amenée d'air débouchant dans l'espace situé entre les joints (5) étant aménagées dans le boîtier, **caractérisée par le fait,** que les ouvertures d'amenée d'air sont pourvues, en vue de l'amenée d'air, de soupapes à air de garde (10) disposées sur les sièges de soupape (6), librement accessibles depuis les faces latérales, de la soupape à clapet et reliées à des conduites d'amenée d'air (14) indépendantes du profil du boîtier.

2. Soupape à clapet selon la revendication 1, **caractérisée par le fait,** que les conduites d'amenée d'air sont des conduites de dérivation ( 14) partant d'une conduite d'amenée d'air disposée sur au moins trois côtés du boîtier.

3. Soupape à clapet selon l'une des revendications 1 ou 2, **caractérisée par le fait,** que les soupapes à air de garde (10) sont exécutées sous forme de soupapes à piston.

4. Soupape à clapet selon la revendication 3, **caractérisée par le fait,** que les surfaces antérieures des pistons (12) des soupapes à air de garde (10) se trouvent au niveau des sièges de soupape (6) de la soupape à clapet ou au-dessus de celui-ci dans leur position de fermeture.

5. Soupape à clapet selon l'une ou plusieurs des revendications 1 à 4, **caractérisée par le fait,** que le siège de soupape (6) de la soupape à clapet est exécuté en acier résistant à la corrosion au moins dans la partie des soupapes à air de garde (10), dans laquelle il constitue le siège de soupape (6) de ces dernières.

6. Soupape à clapet selon l'une ou plusieurs des revendications 3 à 5; **caractérisée par le fait,** que le piston (12) de la soupape à air de garde (10) est en partie ou entièrement constitué de polytétrafluoréthylène ou d'une matière similaire.

7. Soupape à clapet selon l'une ou plusieurs des revendications 1 à 6, **caractérisée par le fait,** que les soupapes à air de garde (10) sont équipées de mécanismes de commande actionnés en fonction de la commande du clapet (1).

8. Soupape à clapet selon l'une ou plusieurs des revendications 1 à 6, **caractérisée par le fait,** que les soupapes à air de garde (10) sont équipées de mécanismes de commande actionnés en fonction de la position des ailes du clapet (1).

9. Soupape à clapet selon l'une ou plusieurs des revendications 1 à 8, **caractérisée par le fait,** que les joints (5) sont agencés de manière réglable sur le clapet (1).

10. Soupape à clapet selon l'une ou plusieurs des revendications 1 à 9, **caractérisée par le fait,** que des soupapes à air de garde (10) ne sont pas agencées dans la zone du bord inférieur environ horizontal du clapet.